# EUROPEAN PATENT APPLICATION

(11) **EP 2 997 819 A1**
(43) Date of publication of application: **23.03.2016**
(21) Application number: 14797504.9
(22) Date of filing: 28.04.2014
(51) Int. Cl.: A01G 9/14

(54) **SOLAR BIO-GREENHOUSE**

(30) Priority: 13.05.2013 RU 2013121735
(71) Applicant: Otkrytoe Aktsionernoe Obschestvo "Kontsern "Promyshlenno-Investitsionny Kapital", Moscow 111141 (RU)
(72) Inventor: KONIN, Sergei Stepanovich, Vladimirskaya obl. g. Kovrov 601907 (RU)
(74) Representative: Jeck, Anton
(86) International application number: PCT/RU2014/000309
(87) International publication number: WO 2014/185816

(57) **Abstract**

The invention relates to the field of agriculture and can be used for producing plant cultivation systems. The solar bio-greenhouse consists of a south part and a north part which are continuously structurally interconnected and are mounted on a base part and base supports or without a base. Said parts are equipped with systems for accumulating heat, and for ventilation and distribution of thermal flows, with systems for microdroplet irrigation and illumination, and also with an automated system for controlling and monitoring the microclimate. An increase in energy efficiency and productivity are ensured in order to increase the growth rate and development of cultivatable, environmentally friendly plants.

## Description

### Field of invention

The invention relates to the field of agriculture and can be used for producing plant cultivation systems, particularly, in a solar bio-greenhouse for year-round cultivation of environmentally friendly plant products.

### Prior art

There are known similar complexes and devices to be mentioned as equivalents to the claimed subject that are protected by patents of the Russian Federation: for useful models - No. No. 69698, 93208, 116011, 121691, and for inventions - No. No. 2025957, 2066526, 2115292, 2124828, 2267255, 2283578, 2391812. More specifically, the useful model according to patent No. 69698 is designed for disposal of livestock waste, cultivation and processing of any greenhouse crops, producing carbon dioxide as well as solid and liquid organic fertilizers. The problem to be solved by the proposed bio complex is disposal of livestock farms waste and improving the economic performance of a bio complex. The problem is solved due to the fact that the bio complex comprises a multi-tiered greenhouse with the systems of heating, illumination, watering and ventilation. The heating system is represented by heated digestion tanks, between which greenhouse spaces are located for cultivation of vegetable crops and mushrooms, additionally, the bio complex is equipped with a mini thermal power plant and a vessel for carbon dioxide, premises for processing and canning the product, and a refrigerated warehouse. The multi-tiered greenhouse is equipped with mobile platforms for maintenance. The bio complex is designed as a two-storied facility.

According to patent No. 93208, the useful model related to alternative power sources, particularly to greenhouses with soil heating by ground heat exchangers with a liquid heat carrier heated by solar radiation energy using solar collectors. The technical effect of such useful model is reduction in material input ratio of the structure due to structural combination of the functions of a transparent protective dome and a solar collector. To achieve the technical effect, the transparent protective dome made of a translucent material (such as cellular polycarbonate) is equipped with frontal lower water-supply and upper water-drainage pipes, filled with the liquid heat carrier and connected by such pipes in the liquid heat carrier circulation system. Three-way thermally actuated valve to divert the heated liquid heat carrier to a heat accumulator in the hottest time of the day are included into the useful model and tapped into the liquid heat carrier circulation system.

According to patent No. 104014, the useful model relates to the field of agriculture, namely to garden greenhouses for cultivation of vegetables, plants, and flowers. The greenhouse structure that features a translucent roofing and a gable roof may be used for protection and cultivation of various plants in the protected grounds on personal garden plots. The problem to be solved by such useful model is reduction in labor cost for the greenhouse installation, improvement of the microclimate parameters inside the greenhouse, creation of comfortable conditions during planting and harvesting the crop, increase in the duration of temperatures required for crop cultivation. To resolve the technical problem, the greenhouse, including a sectoral frame, end walls, a gamble roof and a translucent roofing, is designed so that the section represents a M-shaped rectangular frame coupled on the inside by coupling elements, wherein the side wall is positioned at an angle of 2-3 degrees to the central axis of the greenhouse, a supporting frame with braces is installed inside the greenhouse. The end wall has a door unit, wherein the door opens outwards, and has coupling elements made in the form of rhombus. The gable roof is made of elements composed of two sections joined together at an angle, and the side wall of the greenhouse has a window leaf that is configured to move along the wall, wherein the opening is made in the form of a grate.

According to patent No. 2124828 for invention, the bio complex is designed for cultivation of plants, breeding fish and poultry. The technical object of the invention is a complex cultivation of plant and animal products and a significant increase in productivity. The bio complex comprises a greenhouse with a pond that communicates with a poultry house. This allows for cultivating, simultaneously and comprehensively, both plant and animal products diversified both in terms of species composition and origin, at any latitudes and independently of the environment. As each isolated section has its own microclimate, and biohumus for fertilizing the plants and live feed for fish and water birds is produced from worms, plant residues and compost in the cultivator of the bio complex, this eliminates the need for using chemicals and enables the application of a non-waste technology. The use of a greenhouse, a pond and a poetry house equipped with life-support systems within one bio complex, allows for gathering several harvests of plant products within a year, as well as animal products with an increased biomass.

According to patent No. 2267255, the invention relates to the field of agriculture, particularly, to protective complexes for plants, including greenhouses and orangeries fitted with electrical and other equipment to care for plants and thermophilic shrubs cultivated at home or under small-scale production conditions. The base of the protective complex for plant cultivation is a pit with a supporting frame equipped with a transparent protective cover. The plastic walls of the pit extend slightly beyond the basement of the supporting frame and are reinforced by a folding screen, whereas the pit beds contain ground provided with a thermal layer and elements for soil heating, connected by a pipe with an overhead closed tank suspended under the complex roof, forming, together with the structure of the pit filled with soil and top fertile soil, a common vessel with regulated water supply and drainage using electronic valves installed both on drain branch pipes and on the pipe itself. Using electronic devices and the principle of communicating vessels, a protective complex is created wherein it is possible not only to set the optimum level of water in the ground and the watering time, but also to maintain an optimum mode of heating, lighting, thus regulating the plant growth.

According to patent No. 2391812 for invention, the device comprises a plant cultivation system including a multi-tiered racking structure for plant vegetation trays, a system that creates required climate and light conditions, the latter including at least one light source configured to move up and down between the tiers of the racking structure, that comprises a means providing for continuous reverse motion of the light source between the tiers during the plant irradiation. The rack comprises a section of shelves, mounted by tiers on four supports. The sections are combined into modules, each of which comprises three sections arranged sequentially in series, two end sections and one central section, coupled by a hinge connection configured to turn the end section around the vertical axis towards the module center forming an U-shaped profile. The use of the invention makes it possible to accelerate the plant development by ensuring a uniform plant lighting, increasing the density of the photosynthetic photon flux, avoiding overheating and damage to the cultivated plants leafs, as wells as reducing light losses.

The technical solution which is the most closed to the proposed solar bio-greenhouse in terms of the used essential features (the closest analogue) is the bio complex according to the patent for useful model No. 116011. This useful model relates to the field of agriculture and is designed for disposal of livestock waste, cultivation and processing of any greenhouse crops, producing carbon dioxide, as well as solid and liquid organic fertilizers. The technical effect of such useful model is reducing heat loss and maintenance of desired temperature in the heated digestion tank and in the greenhouse, a rational use of electric power. The bio complex comprises a greenhouse with lighting and ventilation systems, a hopper for loading the raw material, a gasholder, a container for unloading bio fertilizers, a biogas plant including a unit for preliminary preparation of the raw material, a cogeneration plant, a biogas separation system, a heat exchange module with vessels, a heat exchangers unit, heated digestion tank equipped with collectors for feeding the raw material and unloading the pulp and collectors for biogas collection made in the form of cylindrical metal tanks with heat insulation. The greenhouse comprises a warm air supply unit, and its ventilation system is formed by a warm air inflow system and an exhaust hood with heat recovery.

Among the drawbacks of the known devices used for the said purposes, including the closest analogue, it should be noted their energy efficiency and performance that are relatively low for a number of practical situations and do not ensure the required growth and development rates of the cultivated environmentally friendly plants.

### Solved problem and achieved technical effect

The problem solved by the claimed device is improvement of a solar bio-greenhouse in order to eliminate the said drawbacks of the known devices while achieving a technical effect in terms of increasing its energy efficiency and performance for higher growth and development rates of the cultivated environmentally friendly plants.

The said technical effect is ensured, particularly, due to the following interconnected set of essential features of a bio-greenhouse composed of a south side, topped with a translucent cover, and a north side, topped with an opaque cover, that are inseparably structurally interconnected and installed on a basement part and basement supports or without basement. These parts are equipped with heat accumulation, ventilation and heat flow distribution systems, systems of micro-drop watering and lighting, as well as an automated micro-climate control and monitoring system. Herewith the south side is divided by vertical transparent partitions into autonomous sections in an number selected within a range of 2 to 20 for cultivation of environmentally friendly plants, and the north side is composed of four elements that are unequal in terms of volume: a technical zone of the household block, a zone for filling, packing and storage of the finished product, a process zone for biohumus production by earthworms, an auxiliary zone for temporary storage of organic compost, enclosed from the outside with a heat-insulated wall. The process zone comprises process beds filled with organic compost and separated by paths arranged for free movement of worker with mobile platforms thereon.

### List of drawings and their legend

It is advisable to explain the proposed device using the following drawing figures:
Fig. 1. Schematic drawing of a bio-greenhouse section.
Fig. 2. Sectional structural scheme of the bio-greenhouse.
Fig. 3. Scheme of the automated microclimate control and monitoring system in the plant cultivation sections.

Legend of the solar bio-greenhouse drawing figures.
1 - north side of the solar bio-greenhouse;
2 - south side of the solar bio-greenhouse;
3 - biohumus (vermicompost) - organic fertilizer;
4 - process beds for producing biohumus (vermicompost);
5 - heat-insulated wall of the north side 1 of the solar bio-greenhouse;
6 - process zone for producing biohumus (vermicompost);
7 - zone for temporary storage of feed for earth (compost) worms;
8 - paths between the process beds;
9 - mobile platform for transporting feed;
10 - organic compost;
11 - vertical transparent partitions;
12 - section for year-round cultivation of seedlings;
13 - section for year-round cultivation of vegetables;
14 - section for year-round cultivation of potherb;
15 - section for year-round cultivation of fruit;
16 - section for year-round cultivation of berries;
17 - section for year-round cultivation of flowers;
18 - stylized image of plants;
19 - small ventilation circle;
20 - vessels for heat accumulation in the basement part;
21 - big ventilation circle;
22 - stylized image of the sun;
23 - polycarbonate cover of the south side 2 of the solar bio-greenhouse;
24 - basement support of the solar bio-greenhouse;
25 - opaque cover of the north side;
26 - basement part of the bio-greenhouse;
27 - heat accumulation system;
28 - ventilation and heat flows distribution system;
29 - micro-drop watering system;
30 - automated microclimate control and monitoring system;
31 - means of control and regulation of the required temperature;
32 - means of control and regulation of the required humidity;
32 A - means of control and regulation of carbon dioxide content in the air of premises in sections 1 and 2 of the bio-greenhouse;
33 - means of control and regulation of the required plants nutrition level;
34 - lighting system;
35 - LED additional lighting sources;
36 - dispensers - droppers of the watering system;
37 - ventilation outlet pipe;
38 - solar collector;
39 - heat accumulation vessel;
40 - fan heater distributing the heat supplied from the heat accumulation vessel;
41 - furnace using biofuel or gas;
42 - controller;
43 - electric heater embedded into the heat accumulation vessel;
44 - technical zone of the household unit of the bio-greenhouse;
45 - zone for filling, packing and storage of the finished product.

### Detailed description and embodiments of the invention

In the detailed description of the device claimed hereafter, it should be inappropriate to discuss in details its structural elements and features that are known from published materials. It is advisable to show only distinctive features of the solar bio-greenhouse.

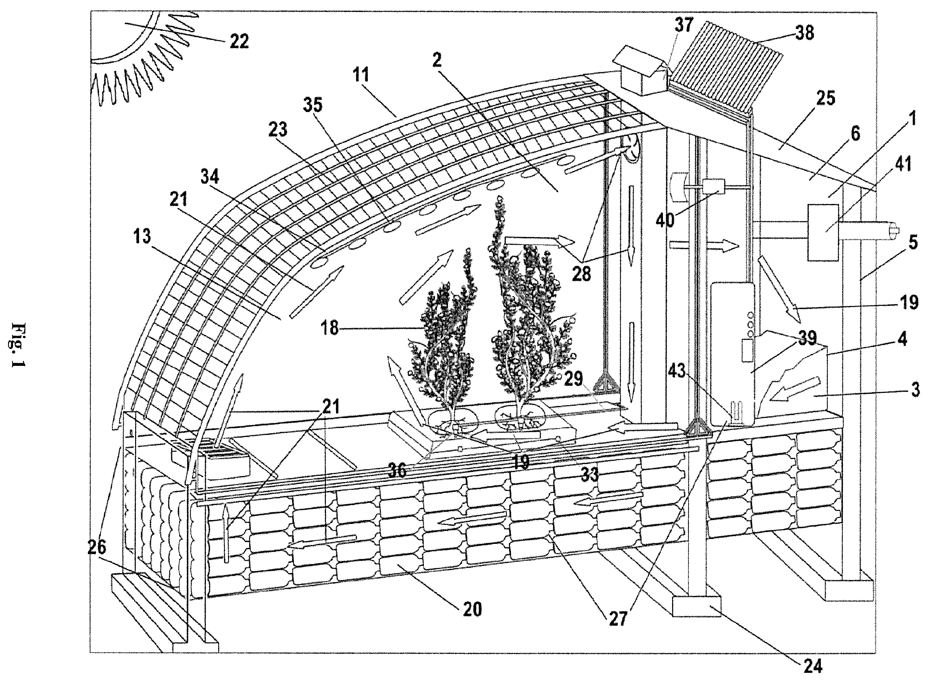

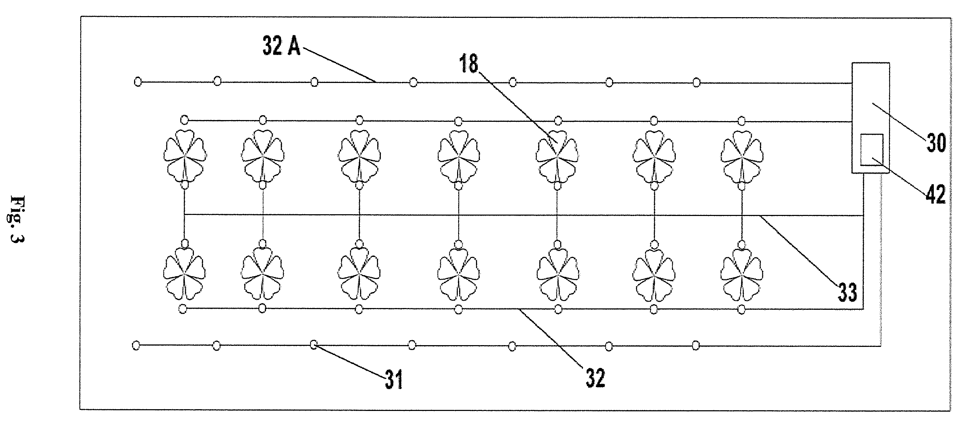

Solar bio-greenhouse (Fig. 1-3) is composed of integrally structurally interconnected south side 2, topped with translucent cover 23 and north side 1, topped with opaque cover 25, installed on basement part 26 and basement supports 24 or without basement. The north side 1 of the solar bio-greenhouse is used for year-round production of biohumus (vermicompost) which is an organic fertilizer obtained using earth (compost) worms. The bio-greenhouse is equipped with the systems of heat accumulation 27, ventilation and heat flow distribution 28, systems of micro-drop watering 29 and lighting 34, as well as microclimate control and monitoring automated system 30.

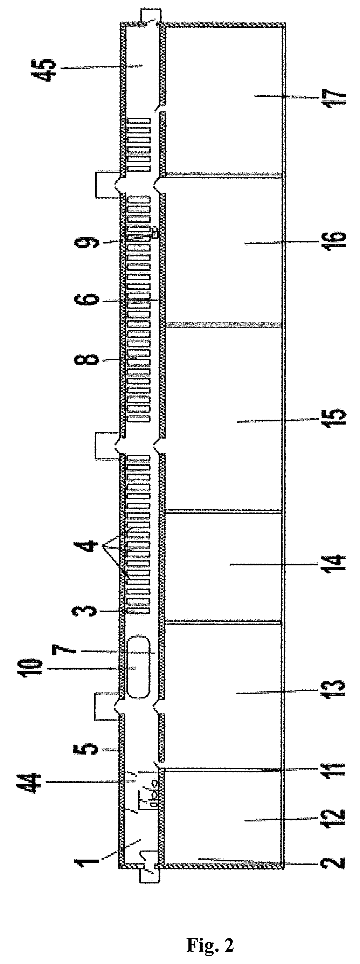

Herein (Fig. 2) the south side of the bio-greenhouse is divided by vertical transparent partitions 11 into autonomous sections in a number selected within a range of 6 to 20. Vertical partitions 11, made of, for instance, polycarbonate, divide the south side of the solar bio-greenhouse into process sections for cultivation of environmentally friendly plants 18 therein. Its north side comprises four elements that are unequal in terms of volume which are a technical zone of the household unit 44, a zone for filling, packing and storage of the finished product 45, a process zone for producing biohumus by earthworms 6, an auxiliary zone 7 for temporary storage of organic compost 10, enclosed from the outside by a heat-insulated wall 5. The process zone includes process beds 4 filled with organic compost 10 and separated by paths 8 configured for free movement of workers with mobile platforms 9 thereon.

A design feature of the bio-greenhouse is, particularly, the fact that the ratio between the volume V₁ of the process zone of its north side and the volume V₂ of the auxiliary zone is selected within a range of 1.05≤ (V₁ + V₂) / V₁ ≤1.4. The auxiliary zone comprises a process zone 6 for producing biohumus (vermicompost), a zone 7 for temporary storage of feed for earth (compost) worms and paths 8 between process beds. Opaque cover 23 of south side 2 of the bio-greenhouse, as well as partitions 11 between autonomous sections are made of polycarbonate.

In the bio-greenhouse, at least one autonomous section 12 is equipped for year-round cultivation of seedlings and/or at least one autonomous section 13 is equipped for year-round cultivation of vegetables, and/or at least one autonomous section 14 is equipped for year-round cultivation of potherb and/or at least one autonomous section 15 is equipped for year-round cultivation of fruit, and/or at least one autonomous section is equipped for year-round cultivation of berries, and/or at least one autonomous section 17 is equipped for year-round cultivation of flowers.

Solar heat accumulation system 27 of the bio-greenhouse is composed of a set of vessels 20 and 39 that are filled with heat-accumulating materials, arranged in the basement part 26 and in the aboveground portion of the sections of south side 2, with intervals between them. Heat is accumulated using solar collectors 38 and is stored together with the heat produced by organic fuel or gas during operation of furnace (41), as well as the heat produced during the operation of electric heater (43). In the heat accumulation system 27 of the bio-greenhouse, vessels 20 and 39 are filled with heat-accumulating liquid such as water.

Ventilation and heat flows distribution system 28 of the bio-greenhouse is made of conventional structural components and divided by the same into a small ventilation circle 19 for carbon dioxide and oxygen exchange between north 1 and south 2 sections, as well as into a big ventilation circle 21 for cold and warm air exchange between south section 2 and basement 26 of the solar bio-greenhouse.

In the bio-greenhouse, micro-drop watering system 29 is made on the basis of dispensers - droppers 36, installed directly in the root zone of cultivated plants.

Lighting system 34 of the bio-greenhouse is equipped with LED additional lighting sources 35.

Automated microclimate control and monitoring system 30 of the bio-greenhouse is equipped with means of control and regulation of required temperature 31, humidity 32, carbon dioxide content in the air of premises 32 A and plant nutrition level 33. In the bio-greenhouse, automated microclimate control and monitoring system 30 is additionally equipped with controllers 42 for automated maintenance of the required temperature, interconnected primarily with receivers of solar heat collectors 38 from its source 22, then with connected receivers 41 of the heat produced by organic biofuel or gas and finally with connected receivers of the heat produced by electric heater 43, as well as elements for uniform distribution of heat from the fan heater 40.

Therefore, the proposed solar bio-greenhouse represents in general a structure arranged in a confined space and divided into two main parts - north side 1 and south side 2. During the operation, in the dark part 1 of the solar bio-greenhouse premise, the year-round production of biohumus (vermicompost) 3 is implemented using earth (compost) worms that "work" in process beds 4, digesting agricultural organic waste and those of the solar bio-greenhouse itself, including the tops of plants, roots, substandard fruit and other waste, preliminary passed through a shredder and a composter.

Part 1 that has an opaque heat-insulated wall 5, is divided, in its turn, into two zones of unequal area: a) a process zone 6 for producing biohumus, where, between the process beds, there are paths 8 arranged with a width sufficient for passage of a worker with a mobile platform 9, whereon containers are installed with feed for worms as required to ensure a continuous worms life-supporting process and for producing biohumus; b) zone 7 for temporary storage of compost (feed) 10 for earth (compost) worms with a minimum tree-day reserve.

The light part 2 of the solar bio-greenhouse premise, with polycarbonate cover 23, is used for year-round cultivation of "bio" plant products. The south side is divided by vertical transparent partitions 11 made of polycarbonate into several sections, depending on the requirements for the cultivated crops. For instance, section 12 for year-round cultivation of seedlings is used for uninterrupted provision of other bio-greenhouse sections with planting stock. As already stated, section 13 allows for cultivation of bio vegetables, section 14, bio potherb, section 15, bio fruit, section 16, bio berries, and section 17, bio flowers 18. Cultivation of various crop species in the sections alternates annually.

Herewith, the worms, "working" in process beds in part 1, actively produce a large amount of "live" carbon dioxide that, by means of a special ventilation system installed in the bio-greenhouse, is continuously supplied in all sections 2 through the small ventilation circle 19, where it is absorbed by cultivated plants. In its turn, air from part 2, enriched with "live" oxygen released by plants in the process of their life activity, is supplied to part 1 for life support of compost worms.

An important feature of the claimed solar bio-greenhouse is the heat accumulation principle consisting in the following: air heated by the sun in the bio-greenhouse is blown through the pipes installed under the bio-greenhouse at the level of the basement or existing vessels 20 filled with water. This allows for transfer of the heat energy from air into the water. So, water performs the function of a heat accumulator. Then, when the temperature in the sections of the bio-greenhouse begins to decrease, heat from underground pipes is supplied upward through big ventilation circle 21.

Actually, the design of the proposed solar bio-greenhouse is developed and its construction is nearing completion in the territory of the Econompark "Green - PIK" in the town of Kovrov of the Vladimir Region.

Thus, the invention relates to solar bio-greenhouses used for cultivation of agricultural plant products (vegetables, potherb, fruit, berries, flowers, plants, seedlings, etc.) on a year-round basis due to efficient use of solar energy, including for heating of the bio-greenhouse itself. Such facilities, due to their optical and physic properties and special equipment, allow for accumulating solar heat energy with its subsequent distribution and use for microclimate control, and allows for efficiently using plant growth factors. Herewith, in this design of the bio-greenhouse, crops grow more intensively, blossom trusses and ripe fruit appear earlier, crop yield is greater, and operation and microclimate control costs are lower than in conventional greenhouses.

It is worth noting that the existing solar bio-greenhouses are mainly designed for one type of activity - cultivation of plant products according to traditional agricultural technologies, which do not always meet the environmental standards, because they use mineral fertilizers, pesticides, herbicides and other chemicals applied in intensive agriculture. The claimed invention is aimed at creating a new type of solar bio-greenhouse - an energy-efficient system for year-round cultivation of environmentally friendly "bio" plant products (according to the "green conveyor" principle) and for production of biohumus using earth (compost) worms within one volume of the solar bio-greenhouse under the controlled microclimate conditions on the basis of using solar and biofuel energy, with the application of low-volume cultivation and soil mixtures on the biohumus basis, drop irrigation, heat accumulators and LED additional lighting of plants. The prefix "bio" draws attention to the full ecological compatibility of the obtained products. Thus, the claimed solar bio-greenhouse integrates three basic components: 1) a solar bio-greenhouse; 2) bioorganic agriculture; 3) vermicultivation.

As compared to, particularly, the closest analogue, the proposed solar bio-greenhouse has the following set of essential features:
1) bioorganic agriculture - cultivation of vegetables, potherb, fruit, berries, flowers and planting stock, exclusively according to the technology of ecological agriculture on the basis of biohumus (vermicompost) organic fertilizer using only biological methods of plant protection;
2) vermicultivation - production of biohumus organic fertilizer on the area of the solar bio-greenhouse using earth (compost) worms of the "Staratel"® line (Terms of Reference No. 246030), for instance, according to the "Walking Bed" technology (Patent No. 2255078), simultaneously with plant cultivation and worms growing;
3) low volume cultivation technology - plant cultivation in special pads (packages) filled with organic soil mixture consisting of peat, sand, biohumus and organic components blended in definite proportions;
4) controlled microclimate - control and regulation of the required temperature, humidity, air exchange, nutrition level and carbon dioxide (CO2) content in each sector of the solar bio-greenhouse using an automated control system;
5) drop irrigation - a method of watering used in the solar bio-greenhouse, wherein water and liquid organic fertilizers are supplied directly to the root zone of cultivated plants, regulated by small portions using dispensers - droppers. It can significantly save water and other resources (fertilizers, labor costs, energy, etc.) to obtain stable high yield;
6) environmentally friendly and reliable LED lighting - using LED lamps for additional lighting of plants instead of harmless fluorescent and sodium lamps;
7) biofuel - additional heating in the SBGH using organic biofuel - fuel pellets - during the seasons of low temperatures;
8) "thermal fortress" - a technology used for construction of a solar bio-greenhouse, which allows for efficiently accumulating and using the solar heat energy;
9) heat accumulators - various engineering and technical solutions, as described above, allowing for accumulating and redistributing heat energy to maintain the required plant microclimate.

The result was solving the problem of creating an energy efficient system for year-round cultivation of environmentally friendly "eco" plant products (according to the "green conveyor" principle) and production of biohumus using earth (compost) worms within one volume of a solar bio-greenhouse under the conditions of controlled microclimate on the basis of using solar energy and biofuel, with the application of low-volume cultivation and soil mixtures on the biohumus basis, drop irrigation, heat accumulators and LED additional plant lighting.

### Industrial Applicability and Achievement of Technical Effect.

As follows from the above, the described design implementation of the claimed device predetermines the achievement of the specified technical effect. Improved energy efficiency and performance of the claimed device, to increase the growth and development rated of cultivated environmentally friendly plants is ensured, as clearly follows from the above, by an integrally interconnected set of significant features of the claims. The design of the device, as follows from its description, makes it possible its serial production, given that, particularly, product is not critical in terms of manufacturing accuracy of its parts.

Among other advantages of the solar bio-greenhouse, it may also be noted that efficient accumulation and use of solar heat energy for its heating significantly reduces the financial costs for heating and predetermines lower cost of the organic waste recycling system using the vermicomposting technology as compared to an expensive system of obtaining organic fertilizer, for instance, in a biogas plant.

## Claims

1. A solar bio-greenhouse, comprising: an integrally structurally interconnected south side, topped with a translucent cover, and a north side, topped with an opaque cover, installed on a basement part and basement supports or without the basement and equipped with systems of heat accumulation, ventilation and heat flows distribution, systems of micro-drop watering and lighting, as well as an automated microclimate control and monitoring system, wherein the south side is divided by vertical transparent partitions into autonomous sections in an amount selected within a range of 6 to 20 for cultivation of environmentally friendly plants, the north side is composed of four elements that are unequal in terms of volume: a technical zone of the bio-greenhouse, a zone for filling, packing and storage of a finished product, a process zone for biohumus production by earthworms, an auxiliary zone for temporary storage of an organic compost, enclosed from an outside by a heat-insulated wall, the process zone comprising process beds filled with the organic compost and divided by paths arranged for free movement of workers with mobile platforms thereon.

2. The bio-greenhouse according to claim 1, wherein a ratio between a volume V₁ of the process zone on its south side and a volume V₂ of the auxiliary zone is selected within a range of 1.05≤(V₁+V₂)/V₁≤1.4.

3. The bio-greenhouse according to claim 1, further comprising a cover of the south side, the translucent cover is made of polycarbonate.

4. The bio-greenhouse according to claim 1, wherein the partitions between the autonomous sections are made of polycarbonate.

5. The bio-greenhouse according to claim 1, wherein at least one autonomous section is equipped for year-round cultivation of seedlings.

6. The bio-greenhouse according to claim 1, wherein at least one autonomous section is equipped for year-round cultivation of vegetables.

7. The bio-greenhouse according to claim 1, wherein at least one autonomous section is equipped for year-round cultivation of potherb.

8. The bio-greenhouse according to claim 1, wherein at least one autonomous section is equipped for year-round cultivation of fruit.

9. The bio-greenhouse according to claim 1, wherein at least one autonomous section is equipped for year-round cultivation of berries.

10. The bio-greenhouse according to claim 1, wherein at least one autonomous section is equipped for year-round cultivation of flowers.

11. The bio-greenhouse according to claim 1, wherein the heat accumulating system is for accumulating a solar heat using solar collectors, a heat produced by organic biofuel or gas during an operation of a furnace, a heat produced during an operation of an electric heater, is composed of a set of vessels filled with heat-accumulating material in the basement part and in the overground portion of the south side sections, with intervals between them.

12. The bio-greenhouse according to claim 11, wherein the vessels in the heat accumulation system are filled with a heat-accumulating liquid.

13. The bio-greenhouse according to claim 1, wherein the ventilation and heat flow distribution system is made of conventional structural components and is divided by them into a small ventilation circle for carbon dioxide and oxygen exchange in air between the north and south sections, as well as into a big ventilation circle for exchange of warm and cold air between a south section and the basement of the solar bio-greenhouse.

14. The bio-greenhouse according to claim 1, wherein a micro-drop watering system is implemented on a basis of dispensers - droppers installed directly in a root zone of cultivated plants.

15. The bio-greenhouse according to claim 1, wherein the lighting system is equipped with LED additional lighting sources.

16. The bio-greenhouse according to claim 1, wherein the automated microclimate control and monitoring system is equipped with means of control and regulation of a required temperature, humidity, carbon dioxide content in air of premises and a plant nutrition level.

17. The bio-greenhouse according to claim 1, wherein the automated microclimate control and monitoring system is equipped with controllers for automatic maintenance of a required temperature, interconnected firstly with receivers of solar heat collectors, then with connected receivers of a heat produced by biofuel or gas and finally with connected receivers of a heat produced by an electric heater, as well as elements of uniform distribution of a heat from a fan heater.
